# EUROPÄISCHE PATENTSCHRIFT

(11) **EP 4 424 143 B1**
(45) Veröffentlichungstag und Bekanntmachung des Hinweises auf die Patenterteilung: **01.04.2026**
(21) Anmeldenummer: 24152102.0
(22) Anmeldetag: 16.01.2024
(51) Int. Cl.: A01F 15/08

(54) **LANDWIRTSCHAFTLICHE BALLENPRESSE**
AGRICULTURAL BALER
PRESSE À BALLES AGRICOLE

(30) Priorität: 02.03.2023 DE 102023105165
(43) Veröffentlichungstag der Anmeldung: 04.09.2024
(73) Patentinhaber: Usines CLAAS France S.A.S, 57140 St. Rémy / Woippy (FR)
(72) Erfinder: FUCHS, Volker, 54439 Saarburg (DE); WUCHER, Renaud, 57070 Metz (FR)
(74) Vertreter: CLAAS Gruppe

(56) Entgegenhaltungen:
- EP-B1- 2 759 192
- US-A1- 2003 159 421

## Beschreibung

Die vorliegende Erfindung betrifft eine landwirtschaftliche Ballenpresse gemäß dem Oberbegriff des unabhängigen Patentanspruchs 1, eine Kombination aus einem landwirtschaftlichen Zugfahrzeug und einer solchen landwirtschaftlichen Ballenpresse gemäß dem Oberbegriff des Patentanspruchs 10 sowie ein Verfahren zum Betrieb einer solchen landwirtschaftlichen Ballenpresse gemäß dem Oberbegriff des unabhängigen Patentanspruchs 11.

Im Betrieb von landwirtschaftlichen Anbaugeräten, beispielsweise einer landwirtschaftlichen Ballenpresse zum Pressen von Erntegut in einen Ballen, kann es aufgrund im Betrieb entstehender hydraulischer Verlustleistungen im Hydrauliksystem des Anbaugeräts, welches zum Versorgen von Antriebsaggregaten und/oder von Arbeitsaggregaten, bei einer Ballenpresse beispielsweise einer Pick-up, eines Raffers, eines Presskanals, einer Ballenrampe oder dergleichen, vorgesehen ist, zu einer Erwärmung des Hydraulikfluids (Hydrauliköl) kommen. Die Erwärmung des Hydraulikfluids bis in einen gewissen Betriebstemperaturbereich hinein ist dabei zulässig oder sogar erwünscht, um einen optimalen Betrieb des landwirtschaftlichen Anbaugeräts zu gewährleisten. Übersteigt die Temperatur des Hydraulikfluids allerdings diesen definierten Betriebstemperaturbereich so kann bzw. kommt es zwangsläufig zu Beschädigungen an bzw. Zerstörungen von hydraulischen Komponenten des Hydrauliksystems des Anbaugeräts. Um die Temperatur des Hydraulikfluids im definierten Betriebstemperaturbereich zu halten bzw. das Hydraulikfluid auf diesen zulässigen Temperaturbereich zu beschränken, ist es erforderlich das Hydraulikfluid des Hydrauliksystems des Anbaugeräts im Betrieb zu temperieren, insbesondere zu kühlen.

Bekanntermaßen gibt es zur Kühlung eines Hydraulikfluids verschiedene Möglichkeiten, wie beispielsweise die Schaffung von großen Tankvolumina bzw. Tankoberflächen oder die Verwendung eines Kühlers. Die Verwendung von Tankbehältern mit großen Tankvolumina bzw. Tankoberflächen sorgt für hohe Herstellkosten und weiterhin unter Umständen für gewisse Herausforderungen bei der Integration in den zur Verfügung stehenden Bauraum des Anbaugeräts. Die Verwendung eines Kühlers zur Kühlung des Hydraulikfluids unterliegt aufgrund der Umgebungsbedingungen während des Betriebs des Anbaugerätes gewissen Herausforderungen. Während des Betriebs des Anbaugeräts, insbesondere bei einem Betrieb einer Ballenpresse, entstehen erhebliche Verunreinigungen, die sich auf dem Anbaugerät, den Arbeitsaggregaten des Anbaugeräts sowie den Komponenten zum Antrieb und zur Versorgung der Arbeitsaggregate, wie beispielsweise dem erwähnten Kühler, ablagern. Um die von dem Kühler aufzubringende Kühlleistung zur Kühlung des Hydraulikfluids sicherzustellen, ist es daher erforderlich den Kühler regelmäßig zu reinigen bzw. zu warten, wodurch ein erhöhter Serviceaufwand verursacht wird. Erfolgt die Reinigung des Kühlers nur unregelmäßig oder überhaupt nicht besteht die Gefahr, dass der Kühler beschädigt wird bzw. die erforderliche Kühlleistung nicht aufgebracht werden kann und das Hydraulikfluid im Hydrauliksystem des Anbaugeräts überhitzt.

Die EP 2 759 192 B1 schlägt weiterhin vor die Verlustleistung eines Hydraulikkreislaufs eines Anbaugerätes in den Hydraulikkreislauf einer Arbeitsmaschine, die mit dem Anbaugerät gekoppelt ist, abzuführen. Insbesondere schlägt die EP 2 759 192 B1 vor Wärme in einem geschlossenen Hydraulikkreislauf des Anbaugeräts durch das Einspülen von relativ kaltem Hydraulikfluid aus einer Arbeitshydraulik der Arbeitsmaschine zwischen einer Hydraulikpumpeneinheit und einem Hydraulikantrieb des Hydraulikkreislaufs des Anbaugerätes auszuspülen. Damit eine solche Kühlung des Hydraulikfluids des Anbaugeräts möglich wird, ist es erforderlich, dass das Hydraulikfluid der Arbeitshydraulik der Arbeitsmaschine in die Speiseleitung des geschlossenen Hydrauliksystems des Anbaugeräts gefördert wird. Hierzu muss eine Fluidzuführleitung, die mit der Arbeitshydraulik der Arbeitsmaschine gekoppelt wird, mit der Speiseleitung des Hydrauliksystems des Anbaugeräts fluidverbunden sein. Eine solche Ausgestaltung ist demnach komplex, erfordert eine gewisse hydraulische Auslegung und ist nicht zwangsläufig als Standard bei allen Anbaugeräten vorhanden.

Ausgehend hiervon ist es demnach die Aufgabe der vorliegenden Erfindung die beschriebenen Nachteile des Standes der Technik auszuräumen und insbesondere eine landwirtschaftliche Ballenpresse anzugeben, welche sich durch eine konstruktiv und betriebstechnisch vereinfachte Ausgestaltung zum Temperieren des Hydraulikfluids des ballenpressenseitigen Hydrauliksystems auszeichnet.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Ballenpresse Gegenstand der entsprechenden abhängigen Patentansprüche 2 bis 9 sind.

Demnach betrifft die vorliegende Erfindung eine landwirtschaftliche Ballenpresse, insbesondere eine Quaderballenpresse, zum Pressen von Erntegut in einen Ballen. Die Ballenpresse umfasst einen Antrieb, zumindest ein Arbeitsaggregat zum Fördern und/oder Verarbeiten des Ernteguts und ein Hydrauliksystem zum Versorgen des Antriebs und/oder des zumindest einen Arbeitsaggregats. Die Ballenpresse ist dadurch gekennzeichnet, dass dem Hydrauliksystem eine hydraulisch betriebene Vorrichtung zum Temperieren des Hydrauliksystems der Ballenpresse zugeordnet ist. Die hydraulisch betriebene Vorrichtung zum Temperieren des Hydrauliksystems der Ballenpresse ist zum Anschluss an ein Hydrauliksystem eines mit der Ballenpresse im Betrieb gekoppelten landwirtschaftlichen Zugfahrzeugs, insbesondere eines Traktors, eingerichtet.

Die Nutzung einer hydraulisch betriebenen Vorrichtung zum Temperieren des Hydrauliksystems der Ballenpresse, welche an das Hydrauliksystem des Zugfahrzeugs angeschlossen wird und somit von dem Hydraulikfluid des Hydrauliksystems des Zugfahrzeugs versorgt wird, sorgt dafür, dass sichergestellt wird, dass das Hydraulikfluid des Hydrauliksystems der Ballenpresse im Betrieb in einen Betriebstemperaturbereich, der vorgegeben bzw. definiert ist, gebracht und/oder in diesem Betriebstemperaturbereich gehalten werden kann. Die Ausgestaltung der Vorrichtung als Teil des Hydrauliksystems der Ballenpresse erlaubt dabei eine konstruktiv besonders einfache, gleichzeitig betriebstechnisch besonders sichere ballenpressenseitige Integration. Aufgrund der Wirkverbindung zwischen Hydraulikfluid des Hydrauliksystems des Zugfahrzeugs und Hydraulikfluid des Hydrauliksystems der Ballenpresse ist zum Temperieren keine direkte Fluidverbindung zwischen beiden Hydraulikfluiden und somit beiden Hydrauliksystemen erforderlich. Lediglich die Temperaturdifferenz zwischen beiden Hydraulikfluiden sorgt dafür, dass dem Hydraulikfluid des Hydrauliksystems der Ballenpresse entweder Wärme hinzugefügt oder entzogen wird und somit sichergestellt werden kann, dass das Hydraulikfluid des Hydrauliksystems der Ballenpresse in den Betriebstemperaturbereich gebracht und/oder in dem Betriebstemperaturbereich gehalten wird.

Gemäß einer vorteilhaften Weiterbildung der Erfindung ist vorgesehen, dass die Vorrichtung zwei Anschlüsse zum Anschließen an in einem Heckbereich des Zugfahrzeugs angeordnete Hydraulikanschlüsse einer Hydraulikanschlussanordnung des Zugfahrzeugs umfasst, um die Vorrichtung mit einer Druckleitung und einer Rücklaufleitung des Hydrauliksystems des Zugfahrzeugs zu verbinden.

Hierdurch wird die Möglichkeit geschaffen die Vorrichtung zum Temperieren des Hydrauliksystems der Ballenpresse mit dem Hydrauliksystem des Zugfahrzeugs zu koppeln bzw. strömungstechnisch zu verbinden. Eine Hydraulikanschlussordnung am Zugfahrzeug mit den Hydraulikanschlüssen, sogenannten Remote-Anschlüssen, die dem Anschluss externer hydraulischer Verbraucher, insbesondere denen eines Anbaugerätes, hier der Ballenpresse, dienen, erlaubt es, das Hydraulikfluid des Hydrauliksystems des Zugfahrzeugs zur Vorrichtung zum Temperieren des Hydrauliksystems der Ballenpresse zu fördern, wodurch der Wärmetransport zwischen den Hydraulikfluiden möglich wird. Dem Hydraulikfluid des Hydrauliksystems des Zugfahrzeugs kann durch diese Anbindung wahlweise Wärme entzogen oder hinzugefügt werden, um das Hydraulikfluid des Hydrauliksystems der Ballenpresse zu temperieren, also das Hydraulikfluid in den Betriebstemperaturbereich zu bringen oder in diesem zu halten.

Erfindungsgemäß ist vorgesehen, dass die Vorrichtung einen Wärmetauscher umfasst, der die Vorrichtung mit dem Hydraulikkreis des Hydrauliksystems der Ballenpresse verbindet.

Vorzugsweise ist vorgesehen, dass der Wärmetauscher als Plattenwärmetauscher ausgebildet ist.

Die ballenpressenseitige Integration eines Wärmetauschers als Teil der Vorrichtung, dem einerseits das Hydraulikfluid des Hydrauliksystems der Ballenpresse und andererseits das Hydraulikfluid des Hydrauliksystems des Zugfahrzeugs zugeführt wird, schafft eine besonders einfache, unkomplizierte aber betriebstechnisch sichere Möglichkeit das Hydraulikfluid des Hydrauliksystems der Ballenpresse zu temperieren, ohne dabei eine direkte Fluidverbindung zwischen beiden Hydrauliksystemen schaffen oder aber eine zusätzliche Vorrichtung, beispielsweise einen Kühler, integrieren zu müssen, die verschmutzungsanfällig ist. Vielmehr erlaubt das Zwischenschalten des Wärmetauschers, dass das Hydraulikfluid des Hydrauliksystems der Ballenpresse über die thermodynamischen Wärmetransportvorgänge Konvektion und Wärmeleitung mittels des Hydraulikfluids des Hydrauliksystems des Zugfahrzeugs temperiert wird.

Gemäß einer vorteilhaften Weiterbildung der Erfindung ist vorgesehen, dass die Vorrichtung eine Schutzventileinrichtung umfasst, die dem Wärmetauscher vorgeschaltet ist und durch welche bei Überschreitung eines Schwellwertes für den Hydraulikdruck, die Durchflussrate und/oder die Temperatur im Hydraulikkreis der Vorrichtung die beiden Anschlüsse der Vorrichtung kurzschließbar sind.

Die Integration einer zusätzlichen Schutzventileinrichtung als Teil der Vorrichtung zum Temperieren des Hydrauliksystems der Ballenpresse sorgt dafür, dass die Betriebssicherheit erhöht wird und insbesondere der Wärmetauscher und somit auch das Hydrauliksystem der Ballenpresse vor Beschädigung oder Zerstörung durch Fehlbedienung und/oder Anomalien im Betrieb geschützt werden. Zu solchen Beschädigungen oder Zerstörungen kann es dann kommen, wenn der Hydraulikdruck, die Temperatur und/oder die Durchflussrate im Hydraulikkreis der Vorrichtung einen Schwellwert übersteigt, der abhängig von der Auslegung des Wärmetauschers und/oder anderer Hydraulikkomponenten, beispielsweise der Hydraulikleitungen, ist. Mittels der Schutzventileinrichtung kann bei einem Übersteigen des Schwellwertes der Wärmetauscher von der Versorgung mit Hydraulikfluid des Hydrauliksystems des Zugfahrzeugs entkoppelt werden, wodurch dieser keinen Schaden nimmt. Das Übersteigen der Schwellwerte kann beispielsweise dann auftreten, wenn ein Bediener einer Kombination aus Zugfahrzeug und Ballenpresse vergisst einen Anschluss der Vorrichtung mit der Rücklaufleitung des Hydrauliksystems des Zugfahrzeugs zu verbinden. In diesem Fall schließt die Schutzventileinrichtung nach Erfassen eines Überschreitens eines oder mehrerer Schwellwerte die Anschlüsse der Vorrichtung kurz, sodass der Wärmetauscher von der Versorgung entkoppelt wird, wodurch die Betriebssicherheit der Ballenpresse erhöht wird. Die Ventileinrichtung kann dabei ein einziges Ventil oder aber eine Kombination mehrerer Ventile umfassen, um die Betriebssicherheit in allen gewünschten Betriebssituationen, also überhöhter Druck, zu hohe Durchflussrate und/oder zu hohe Temperatur des Hydraulikfluids im Hydraulikkreis der Vorrichtung, zu gewährleisten.

Gemäß einer vorteilhaften Weiterbildung der Erfindung ist vorgesehen, dass die Vorrichtung zum Detektieren der Überschreitung des Schwellwertes für den Hydraulikdruck, die Durchflussrate und/oder die Temperatur im Hydraulikkreis der Vorrichtung zumindest einen Sensor umfasst.

Gemäß einer vorteilhaften Weiterbildung der Erfindung ist vorgesehen, dass der zumindest eine Sensor als Schalter ausgebildet ist, der die Schutzventileinrichtung bei einer detektierten Überschreitung des Schwellwertes für den Hydraulikdruck, die Durchflussrate und/oder die Temperatur im Hydraulikkreis der Vorrichtung selbsttätig ansteuert.

Gemäß einer vorteilhaften Weiterbildung der Erfindung ist vorgesehen, dass die Ballenpresse eine zur Ansteuerung der Schutzventileinrichtung eingerichtete Steuerungsvorrichtung umfasst.

Gemäß einer vorteilhaften Weiterbildung der Erfindung ist vorgesehen, dass der zumindest eine Sensor Messsignale an die Steuerungsvorrichtung übertragt und die Steuerungsvorrichtung die Schutzventileinrichtung bei Überschreitung des Schwellwertes für den Hydraulikdruck, die Durchflussrate und/oder die Temperatur im Hydraulikkreis der Vorrichtung ansteuert.

Anhand des oder der Sensoren, also eines Drucksensors, eines Durchflussratensensors, beispielsweise einer Messblende, und/oder eines Temperatursensors, optional in Kombination mit einer Steuerungsvorrichtung, ist es möglich eine Überschreitung des oder der Schwellenwerte für den Hydraulikdruck, die Durchflussrate und/oder die Temperatur im Hydraulikkreis der Vorrichtung zu detektieren und die Schutzventileinrichtung umgehend anzusteuern, um die Anschlüsse der Vorrichtung kurzzuschließen und eine Beschädigung der Vorrichtung, insbesondere des Wärmetauschers, zu verhindern. Hierdurch wird die Betriebssicherheit der Ballenpresse bei einer Fehlbedienung und/oder bei Anomalien im Betrieb gewährleistet. Die Ausgestaltungen der Sensoren als Schalter oder aber in Kombination mit einer Steuerungsvorrichtung erlaubt es dabei unterschiedliche elektronische Systemarchitekturen der Ballenpresse zu berücksichtigen und somit die Schutzventileinrichtung unabhängig von einer spezifischen Systemarchitektur zu implementieren.

Gemäß einer vorteilhaften Weiterbildung der Erfindung ist vorgesehen, dass der Hydraulikkreis der Vorrichtung dazu eingerichtet ist, das zumindest eine Arbeitsaggregat der Ballenpresse zu betreiben bzw. zu versorgen.

Hierdurch wird die Möglichkeit geschaffen nicht nur das ballenpressenseitige Hydrauliksystem zum Betreiben bzw. Versorgen des oder der Arbeitsaggregate der Ballenpresse, sondern vielmehr alternativ oder ergänzend hierzu auch das Hydraulikfluid bzw. die hydraulische Leistung des Zugfahrzeugs für die Versorgung des oder der Arbeitsaggregate der Ballenpresse zu nutzen. Hierdurch kann sichergestellt werden, dass in allen während des Betriebs der Ballenpresse auftretenden Betriebssituationen eine ausreichende hydraulische Leistung an dem oder den Arbeitsaggregaten der Ballenpresse bereitsteht bzw. von dem oder den Arbeitsaggregaten der Ballenpresse abgerufen werden kann.

Die erfindungsgemäße Aufgabe wird ferner durch eine Kombination aus einem landwirtschaftlichen Zugfahrzeug, insbesondere einem Traktor, und einer landwirtschaftlichen Ballenpresse, insbesondere einer Quaderballenpresse, gemäß dem Patentanspruch 10 gelöst.

Demnach betrifft die vorliegende Erfindung somit ferner eine Kombination aus einem landwirtschaftlichen Zugfahrzeug, insbesondere einem Traktor, und einer landwirtschaftlichen Ballenpresse, insbesondere einer Quaderballenpresse, zum Pressen von Erntegut in einen Ballen. Das Zugfahrzeug umfasst eine Antriebseinheit und ein Hydrauliksystem zum Betreiben von Antriebs- und/oder Arbeitsaggregaten des Zugfahrzeugs und/oder der Ballenpresse. Die Ballenpresse umfasst einen Antrieb, zumindest ein Arbeitsaggregat zum Fördern und/oder Verarbeiten des Ernteguts und ein Hydrauliksystem zum Versorgen des Antriebs und/oder des zumindest einen Arbeitsaggregats. Die Kombination aus Zugfahrzeug und Ballenpresse ist dadurch gekennzeichnet, dass dem Hydrauliksystem der Ballenpresse eine hydraulisch betriebene Vorrichtung zum Temperieren des Hydrauliksystems der Ballenpresse zugeordnet ist, welche an das Hydrauliksystem des Zugfahrzeugs angeschlossen ist, wobei die Vorrichtung einen Wärmetauscher umfasst, der die Vorrichtung mit dem Hydraulickreis des Hydrauliksystems der Ballenpresse verbindet.

Weiterhin wird die erfindungsgemäße Aufgabe durch ein Verfahren zum Betrieb einer landwirtschaftlichen Ballenpresse, insbesondere einer Quaderballenpresse, gemäß dem unabhängigen Patentanspruch 11 gelöst.

Demnach betrifft die vorliegende Erfindung somit weiterhin ein Verfahren zum Betrieb einer landwirtschaftlichen Ballenpresse, insbesondere einer Quaderballenpresse, zum Pressen von Erntegut in einen Ballen. Die Ballenpresse umfasst einen Antrieb, zumindest ein Arbeitsaggregat zum Fördern und/oder Verarbeiten des Ernteguts und ein Hydrauliksystem zum Versorgen des Antriebs und/oder des zumindest einen Arbeitsaggregats. Das Verfahren ist dadurch gekennzeichnet, dass das Hydrauliksystem der Ballenpresse zum Erreichen und/oder Halten eines Betriebstemperaturbereiches, in welchem die Ballenpresse optimal betrieben wird, durch eine hydraulisch betriebene Vorrichtung temperiert wird. Die Vorrichtung wird zum Betreiben an ein Hydrauliksystem eines mit der Ballenpresse im Betrieb gekoppelten landwirtschaftlichen Zugfahrzeugs, insbesondere eines Traktors, angeschlossen, wobei die Vorrichtung einen Wärmetauscher umfasst, der die Vorrichtung mit dem Hydraulickreis des Hydrauliksystems der Ballenpresse verbindet.

Die Merkmale der abhängigen Patentansprüche 2 bis 9 sind gleichermaßen auf die erfindungsmäße Kombination aus landwirtschaftlichem Zugfahrzeug und landwirtschaftlicher Ballenpresse sowie auf das erfindungsgemäße Verfahren zum Betrieb der landwirtschaftlichen Ballenpresse übertragbar.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen Kombination aus einem landwirtschaftlichem Zugfahrzeug in Gestalt eines Traktors und einer erfindungsgemäßen landwirtschaftlichen Ballenpresse in Gestalt einer Quaderballenpresse;
- FIG. 2: eine schematische und exemplarische rückwärtige Teilansicht des landwirtschaftlichen Zugfahrzeugs aus FIG. 1; und

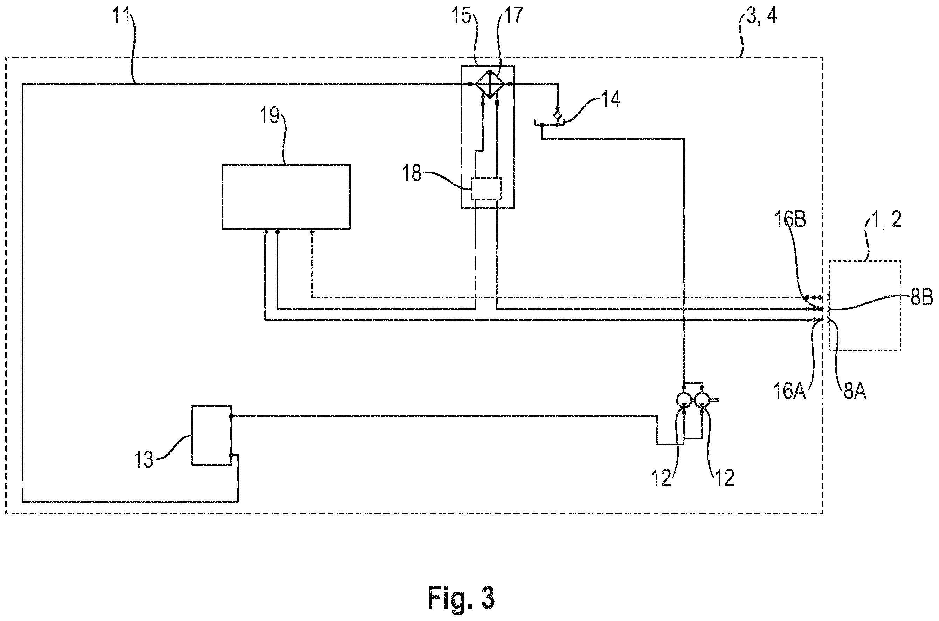

- FIG. 3: einen vereinfachten Hydraulikschaltplan der erfindungsgemäßen Kombination aus landwirtschaftlichem Zugfahrzeug und erfindungsgemäßer landwirtschaftlicher Ballenpresse aus FIG. 1.

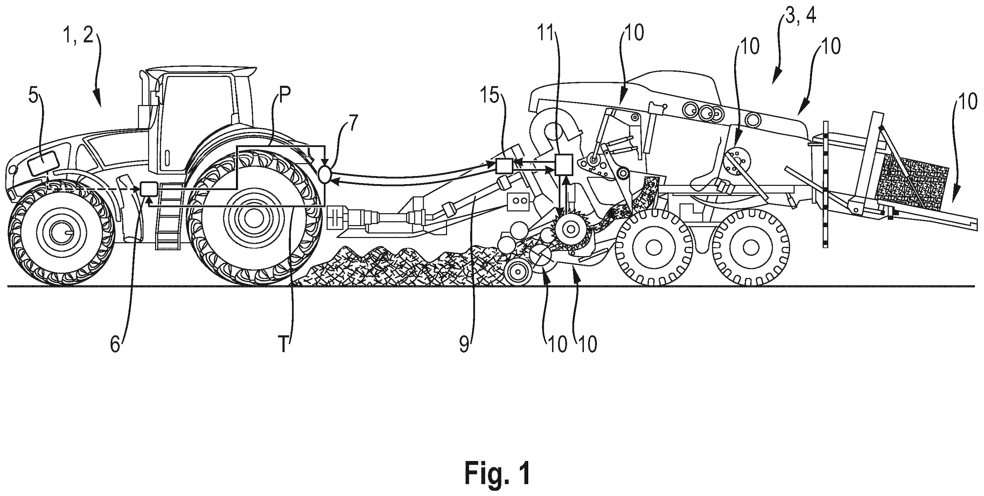

FIG. 1 zeigt eine schematische und exemplarische Darstellung einer erfindungsgemäßen Kombination aus einem landwirtschaftlichem Zugfahrzeug 1 in Gestalt eines Traktors 2 und eines landwirtschaftlichen Anbaugeräts 3 in Gestalt einer landwirtschaftlichen Ballenpresse 4 zum Pressen von Erntegut in einen Ballen, hier einer Quaderballenpresse. Der Traktor 2 umfasst eine Antriebseinheit 5 und kann ein der Antriebseinheit 5 - in FIG. 1 nicht dargestelltes - zugeordnetes Getriebe umfassen. Die Antriebseinheit 5 kann als verbrennungsmotorische Antriebseinheit 5, als batterieelektrische Antriebseinheit 5 oder aber als hybride, also verbrennungsmotorische und batterieelektrische, Antriebseinheit 5 ausgebildet sein. Der Traktor 2 umfasst weiterhin ein Hydrauliksystem 6 zum Betreiben von Antriebs- und/oder Arbeitsaggregaten des Traktors 2. Durch die Antriebseinheit 5 und/oder das Hydrauliksystem 6 kann zudem die an den Traktor 2 adaptierte bzw. mit dem Traktor 2 gekoppelte Ballenpresse 4 angetrieben werden. Zur Ansteuerung der Antriebseinheit 5 und/oder des Hydrauliksystems 6 des Traktors 2 kann eine - in FIG. 1 nicht dargestellte - Steuerungsvorrichtung vorgesehen sein. Die Antriebseinheit 5 stellt den anzutreibenden Komponenten, wie einer Hydraulikpumpe des Hydrauliksystems 6, mechanische Antriebsenergie zur Verfügung.

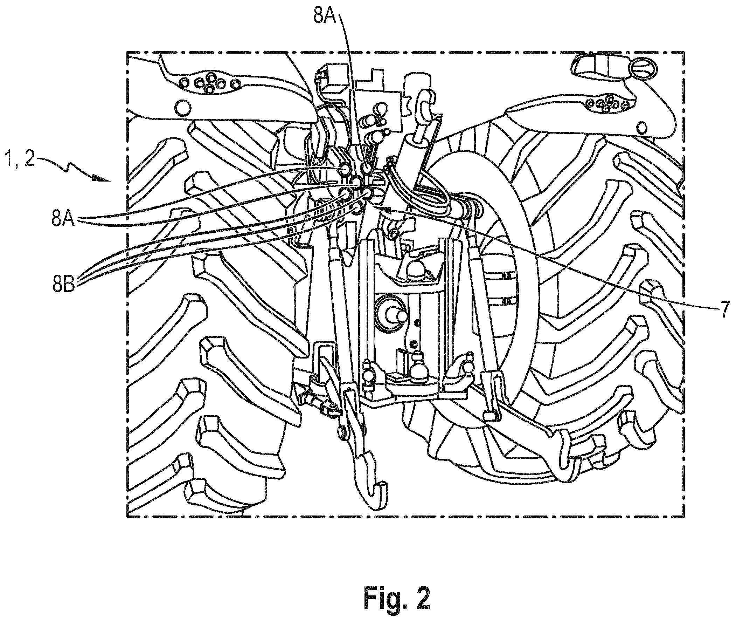

In einem Heckbereich des Traktors 2 ist, wie in FIG. 2 schematisch und exemplarisch dargestellt, eine Hydraulikanschlussanordnung 7 mit Hydraulikanschlüssen 8A, 8B, sogenannten Remote-Anschlüssen, vorgesehen, die dem Anschluss externer hydraulischer Verbraucher, insbesondere denen der Ballenpresse 4, dient. Da diese hydraulischen Verbraucher jeweils über ein Steuerventil gesteuert oder betrieben werden, handelt es sich bei den Hydraulikanschlüssen 8A, 8B um jeweils mindestens zwei Anschlüsse, um den oder die hydraulischen Verbraucher jeweils mit einer Druckleitung P und einer Rücklaufleitung T zu verbinden.

Die Ballenpresse 4 umfasst einen Antrieb 9, der mit der Antriebseinheit 5 des Traktors 2 im Betrieb der Ballenpresse 4 zur Übertragung einer Antriebsleistung von dem Traktor 2 an die Ballenpresse 4 wirkverbunden ist. Hierzu kann an dem Traktor 2 ein mit der Antriebseinheit 5 wirkverbundener Nebenabtrieb, der allgemein auch als Zapfwelle oder nach der Abkürzung des englischen Begriffs "power take-off" als PTO bezeichnet wird, vorgesehen sein, über den der Antrieb 9 der Ballenpresse 4 mit der Antriebseinheit 5 des Traktors 2 wirkverbunden ist. Der Antrieb 9 der Ballenpresse 4 umfasst verschiedene Antriebsaggregate, auch als Antriebsstrangkomponenten bezeichnet, beispielsweise Wellen, Kupplungen, Schwungräder, Getriebestufen oder dergleichen, welche die von der Antriebseinheit 5 des Traktors 2 an der Ballenpresse 4 bereitgestellte Antriebsleistung übertragen und gegebenenfalls wandeln. Wie bereits angedeutet umfasst die Ballenpresse 4 Arbeitsaggregate 10, die dem Fördern und/oder Verarbeiten des auf einer landwirtschaftlichen Fläche in Schwaden abgelegten Ernteguts zu Ballen, dient. Arbeitsaggregate 10 der Ballenpresse 4 sind beispielsweise eine Pick-up, ein Schneidrotor, ein Raffer, ein Presskolben, ein Knoter, ein Presskanal, eine Ballenrampe oder dergleichen, dessen grundsätzlicher Aufbau bekannt ist. Die Ballenpresse 4 umfasst weiterhin ein Hydrauliksystem 11, das zum Versorgen des Antriebs (9), insbesondere zumindest einiger der Antriebsaggregate des Antriebs 9, und/oder eines oder mehrerer der Arbeitsaggregate 10 vorgesehen ist. Versorgen ist hier so zu verstehen, dass das Hydraulikfluid des Hydraulikkreises des Hydrauliksystems 11 sowohl zum Betrieb von Komponenten als auch für andere Funktionen, wie beispielsweise der Schmierung von Antriebsaggregat- und/oder Arbeitsaggregatkomponenten, verwendet werden kann. Das Hydrauliksystem 11 der Ballenpresse 4 ist vorzugsweise ein geschlossener Hydraulikkreis, der eine oder mehrere Hydraulikpumpen 12, die von dem Antrieb 9 der Ballenpresse angetrieben werden, und eine Ventileinrichtung 13, welche die Versorgung des Antriebs 9 und/oder des oder der Arbeitsaggregate 10 mit Hydraulikfluid aus dem Hydrauliksystem 11 steuert und ein Ventil oder eine Kombination von Ventilen umfassen kann, umfasst. Weiterhin kann das Hydrauliksystem 11 ein Tankbehältnis 14 zur Bevorratung bzw. Aufnahme des Hydraulikfluids sowie eine - in den FIGs. nicht dargestellte - Steuerungsvorrichtung zur Steuerung der Hydraulikpumpen 12, der Ventileinrichtung 13 und/oder anderer Komponenten der Ballenpresse 4 umfassen.

Im Betrieb der Ballenpresse 4 kann sich das Hydraulikfluid im Hydraulikkreis des Hydrauliksystems 11 der Ballenpresse 4 aufgrund von hydraulischen Verlusten an den verschiedenen Komponenten des Hydrauliksystems 11, also beispielsweise den Hydraulikpumpen 12, Hydraulikleitungen und/oder der Ventileinrichtung 13, erwärmen. Ein gewisser Grad an Erwärmung des Hydraulikfluids ist dabei wünschenswert bzw. erforderlich, um einen optimalen Betrieb der Ballenpresse 4 zu gewährleisten. Um das Hydraulikfluid des Hydrauliksystems 11 der Ballenpresse 4 in diesen Betriebstemperaturbereich zu bringen und/oder in diesem Betriebstemperaturbereich zu halten, ist dem Hydrauliksystem 11 der Ballenpresse 4 eine hydraulisch betriebene Vorrichtung 15 zugeordnet. Um dies zu erreichen, ist diese Vorrichtung 15 zum Temperieren des Hydrauliksystems 11 der Ballenpresse 4 dazu eingerichtet, an das Hydrauliksystem 6 des mit der Ballenpresse 4 im Betrieb gekoppelten Zugfahrzeugs 1, hier dem Traktor 2, angeschlossen zu werden. Mit anderen Worten, das Hydrauliksystem 11 der Ballenpresse 4 umfasst eine Vorrichtung 15 zum Temperieren des Hydrauliksystems 11 der Ballenpresse 4, die im Betrieb der Ballenpresse 4 an das Hydrauliksystem 6 des Traktors 2 angeschlossen ist. Dadurch, dass das Hydrauliksystem 11 der Ballenpresse 4 der Versorgung des Antriebs 9, insbesondere der Antriebsaggregate des Antriebs 9, und/oder des oder der Arbeitsaggregate 10 der Ballenpresse 4 dient, wird gleichzeitig sichergestellt, dass auch die von dem Hydrauliksystem 11 versorgten Antriebsaggregate und/oder Arbeitsaggregate 10 in einen optimalen Temperaturbereich gebracht und in diesem gehalten, also temperiert, werden können.

Damit der Anschluss der Vorrichtung 15 an das Hydrauliksystem 6 des Traktors 2 erfolgen kann, umfasst die Vorrichtung 15 zwei Anschlüsse 16A, 16B. Diese Anschlüsse 16A, 16B sind dazu eingerichtet, an die in dem Heckbereich des Traktors 2 ausgebildete Hydraulikanschlussanordnung 7, speziell an die Hydraulikanschlüsse 8A, 8B der Hydraulikanschlussanordnung 7, angeschlossen zu werden, um die Vorrichtung 15 mit der Druckleitung P und der Rücklaufleitung T des Hydrauliksystems 6 des Traktors 2 zu verbinden. Über den Anschluss der Vorrichtung 15 an die Hydraulikanschlussanordnung 7 des Traktors 2 wird das Hydraulikfluid des Hydrauliksystems 6 des Traktors 2 zur bzw. durch die Vorrichtung 15 zum Temperieren des Hydraulikfluids des Hydrauliksystems 11 der Ballenpresse 4 gefördert.

Die Vorrichtung 15 zum Temperieren des Hydrauliksystems 11 der Ballenpresse 4 umfasst einen Wärmetauscher 17, der die Vorrichtung 15 mit dem Hydraulikkreis des Hydrauliksystems 11 der Ballenpresse 4 verbindet. Der Wärmetauscher 17 ist ein Fluid-Fluid-Wärmetauscher, der vorzugsweise als Plattenwärmetauscher ausgebildet ist. Der Wärmetauscher 17 ist demnach sowohl in den Hydraulikkreis des Hydrauliksystems 11 der Ballenpresse 4 als auch in den Hydraulikkreis der Vorrichtung 15 eingebunden, sodass das Hydraulikfluid des Hydrauliksystems 11 der Ballenpresse 4 über die thermodynamischen Wärmetransportvorgänge Konvektion und Wärmeleitung mittels des Hydraulikfluids des Hydrauliksystems 6 des Traktors 2 im Betrieb temperiert wird. Im Betrieb der Ballenpresse 4 wird demnach über die Hydraulikanschlussordnung 7 des Traktors 2 das Hydraulikfluid des Hydrauliksystems 6 des Traktors 2 an die Vorrichtung 15 zum Temperieren des Hydrauliksystems 11 der Ballenpresse 4 gefördert, durchfließt den Wärmetauscher 17 der Vorrichtung 15 und führt dem Hydraulikfluid des Hydrauliksystems 11 der Ballenpresse 4 dabei Wärme zu oder entnimmt dem Hydraulikfluid des Hydrauliksystems 11 der Ballenpresse 4 dabei Wärme und wird anschließend über die Hydraulikanschlussanordnung 7 des Traktors 2 wieder dem Hydrauliksystem 6 des Traktors 2 zugeführt. Hierdurch kann das Hydraulikfluid des Hydrauliksystems 11 der Ballenpresse 4 effizient derart temperiert werden, dass das sichergestellt werden kann, dass sich die Temperatur des Hydraulikfluids des Hydrauliksystems 11 der Ballenpresse 4 im Betrieb der Ballenpresse 4 im Wesentlichen in dem bestimmten bzw. definierten Betriebstemperaturbereich befindet. Im Wesentlichen bedeutet hierbei, dass kleinere kurzfristige Abweichungen der Temperatur des Hydraulikfluids von dem Betriebstemperaturbereich, beispielsweise Temperaturspitzen, zulässig sind. Auch eine gewisse Zeit zum Erwärmen des Hydraulikfluids bei der Inbetriebnahme der Ballenpresse 4 ist hierbei mit eingeschlossen.

Um die Vorrichtung 15, insbesondere den Wärmetauscher 17, vor Beschädigungen oder Zerstörung durch Fehlbedienungen und/oder Anomalien im Betrieb der Ballenpresse 4 zu schützen, umfasst die Vorrichtung 15 eine Schutzventileinrichtung 18, die dem Wärmetauscher 17 vorgeschaltet ist und durch die bei einer Überschreitung eines vorgegebenen bzw. definierten Schwellwertes für den Hydraulikdruck, die Durchflussrate und/oder die Temperatur des Hydraulikfluids im Hydraulikkreis der Vorrichtung 15 die beiden Anschlüsse 16A, 16B der Vorrichtung 15 kurzgeschlossen werden können. Die Schutzventileinrichtung 18 kann ein Ventil oder eine Kombination von Ventilen umfassen, mittels dem oder derer die Anschlüsse 16A, 16B der Vorrichtung 15 in einem anomalen Betriebszustand kurzgeschlossen werden können.

Um einen solchen anomalen Betriebszustand der Ballenpresse 4 bzw. im Hydraulickreis der Vorrichtung 15 zu detektieren, umfasst die Vorrichtung 15 einen oder mehrere - in den FIGs. nicht dargestellte - Sensoren. Die Vorrichtung 15 kann beispielsweise einen Drucksensor, einen Durchflussratensensor, beispielsweise eine Messblende, und/oder einen Temperatursensor umfassen, mittels dem eine Überschreitung des vorgegebenen bzw. definierten Schwellwertes für den Hydraulikdruck, die Durchflussrate und/oder die Temperatur des Hydraulikfluids im Hydraulikkreis der Vorrichtung 15 detektiert werden kann. In einer Ausführungsform ist der oder sind die Sensoren als Schalter ausgebildet, welche die Schutzventileinrichtung 18 bei einer detektierten Überschreitung des Schwellwertes für den Hydraulikdruck, die Durchflussrate und oder die Temperatur des Hydraulikfluids im Hydraulikkreis der Vorrichtung 15 selbsttätig ansteuern. Wird somit der als Schalter ausgebildete Sensor ausgelöst, so wird umgehend die Schutzventileinrichtung 18 angesteuert und die Anschlüsse 16A, 16B der Vorrichtung 15 kurzgeschlossen. Die Sensoren müssen nicht als Schalter ausgebildet sein, sondern können genauso gut Messsignale an die Steuerungsvorrichtung der Ballenpresse 4 übertragen, die die Messsignale mit in einer mit der Steuerungsvorrichtung verbundenen Speichereinheit hinterlegten Schwellwerten für den Hydraulikdruck, die Durchflussrate und/oder die Temperatur des Hydraulikfluids im Hydraulikkreis der Vorrichtung 15 vergleicht. Wird ein Überschreiten eines oder mehrerer der hinterlegten Schwellwerte detektiert, steuert die Steuerungsvorrichtung die Schutzventileinrichtung 18 an, wodurch die Anschlüsse 16A, 16B der Vorrichtung 15 kurzgeschlossen werden. Durch die verschiedenen Möglichkeiten der Sensorausgestaltung kann unabhängig von der elektronischen Systemarchitektur der Ballenpresse 4 stets die Funktion der Schutzventileinrichtung 18 bei anomalen Betriebszuständen implementiert werden.

Das vom Hydrauliksystem 6 des Traktors 2 über die Hydraulikanschlussanordnung 7 des Traktors 2 zur Vorrichtung 15 geförderte Hydraulikfluid kann neben der Sicherstellung der Funktion "Temperierung des Hydraulikfluids des Hydrauliksystems 11 der Ballenpresse 4" auch zum Betreiben bzw. Versorgen des oder der Arbeitsaggregate 10 der Ballenpresse 4 genutzt werden. Hierzu ist der Hydraulikkreis der Vorrichtung 15 mit einer weiteren Ventileinrichtung 19 der Ballenpresse 4 strömungstechnisch verbunden, die ein Ventil oder eine Kombination von Ventilen umfassen kann und über die das der Vorrichtung 15 zugeführte Hydraulikfluid, das dem Hydrauliksystem 6 des Traktors 2 entstammt, dem oder den Arbeitsaggregaten 10 der Ballenpresse 4 zugeführt wird. Hierdurch ist der Betrieb der Arbeitsaggregate 10 nicht allein vom ballenpressenseitigen Hydrauliksystem 11 abhängig. Vielmehr kann das Hydraulikfluid bzw. die hydraulische Leistung des Hydrauliksystems 6 des Traktors 2 alternativ oder ergänzend dazu genutzt werden, die Arbeitsaggregate 10 der Ballenpresse 4 zu betreiben. Dies erlaubt, dass in allen während des Betriebs der Ballenpresse 4 auftretenden Betriebssituationen eine ausreichende hydraulische Leistung an dem oder den Arbeitsaggregaten 10 der Ballenpresse 4 bereitsteht bzw. von dem oder den Arbeitsaggregaten 10 der Ballenpresse 4 abgerufen werden kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliches Zugfahrzeug
- 2: Traktor
- 3: Landwirtschaftliches Anbaugerät
- 4: Landwirtschaftliche Ballenpresse
- 5: Antriebseinheit
- 6: Hydrauliksystem des Zugfahrzeugs
- 7: Hydraulikanschlussanordnung
- 8A, 8B: Hydraulikanschlüsse
- 9: Antrieb
- 10: Arbeitsaggregat
- 11: Hydrauliksystem der Ballenpresse
- 12: Hydraulikpumpe
- 13: Ventileinrichtung
- 14: Tankbehältnis
- 15: Vorrichtung zum Temperieren
- 16A, 16B: Anschlüsse
- 17: Wärmetauscher
- 18: Schutzventileinrichtung
- 19: Ventileinrichtung

## Patentansprüche

1. Landwirtschaftliche Ballenpresse (4), insbesondere Quaderballenpresse, zum Pressen von Erntegut in einen Ballen, wobei die Ballenpresse (4) einen Antrieb (9), zumindest ein Arbeitsaggregat (10) zum Fördern und/oder Verarbeiten des Ernteguts und ein Hydrauliksystem (11) zum Versorgen des Antriebs (9) und/oder des zumindest einen Arbeitsaggregats (10) umfasst, **dadurch gekennzeichnet, dass** dem Hydrauliksystem (11) eine hydraulisch betriebene Vorrichtung (15) zum Temperieren des Hydrauliksystems (11) zugeordnet ist, welche zum Anschluss an ein Hydrauliksystem (6) eines mit der Ballenpresse (4) im Betrieb gekoppelten landwirtschaftlichen Zugfahrzeugs (1), insbesondere eines Traktors (2), eingerichtet ist, wobei die Vorrichtung (15) einen Wärmetauscher (17) umfasst, der die Vorrichtung (15) mit dem Hydraulickreis des Hydrauliksystems (11) der Ballenpresse (4) verbindet.

2. Ballenpresse (4) nach Anspruch 1, **dadurch gekennzeichnet, dass** die Vorrichtung (15) zwei Anschlüsse (16A, 16B) zum Anschließen an in einem Heckbereich des Zugfahrzeugs (1) angeordnete Hydraulikanschlüsse (8A, 8B) einer Hydraulikanschlussanordnung (7) des Zugfahrzeugs (1) umfasst, um die Vorrichtung (15) mit einer Druckleitung (P) und einer Rücklaufleitung (T) des Hydrauliksystems (6) des Zugfahrzeugs (1) zu verbinden.

3. Ballenpresse (4) nach Anspruch 1 oder 2, **dadurch gekennzeichnet, dass** der Wärmetauscher (17) als Plattenwärmetauscher ausgebildet ist.

4. Ballenpresse (4) nach einem der Ansprüche 1 bis 3, **dadurch gekennzeichnet, dass** die Vorrichtung (15) eine Schutzventileinrichtung (18) umfasst, die dem Wärmetauscher (17) vorgeschaltet ist und durch welche bei Überschreitung eines Schwellwertes für den Hydraulikdruck, die Durchflussrate und/oder die Temperatur im Hydraulickreis der Vorrichtung (15) die beiden Anschlüsse (16A, 16B) der Vorrichtung (15) kurzschließbar sind.

5. Ballenpresse (4) nach Anspruch 4, **dadurch gekennzeichnet, dass** die Vorrichtung (15) zum Detektieren der Überschreitung des Schwellwertes für den Hydraulikdruck, die Durchflussrate und/oder die Temperatur im Hydraulikkreis der Vorrichtung (15) zumindest einen Sensor umfasst.

6. Ballenpresse (4) nach Anspruch 5, **dadurch gekennzeichnet, dass** der zumindest eine Sensor als Schalter ausgebildet ist, der die Schutzventileinrichtung (18) bei einer detektierten Überschreitung des Schwellwertes für den Hydraulikdruck, die Durchflussrate und/oder die Temperatur im Hydraulikkreis der Vorrichtung (15) selbsttätig ansteuert.

7. Ballenpresse (4) nach einem der Ansprüche 4 bis 6, **dadurch gekennzeichnet, dass** die Ballenpresse (4) eine zur Ansteuerung der Schutzventileinrichtung (18) eingerichtete Steuerungsvorrichtung umfasst.

8. Ballenpresse (4) nach Anspruch 7, **dadurch gekennzeichnet, dass** der zumindest eine Sensor Messsignale an die Steuerungsvorrichtung übertragt und die Steuerungsvorrichtung die Schutzventileinrichtung (18) bei Überschreitung des Schwellwertes für den Hydraulikdruck, die Durchflussrate und/oder die Temperatur im Hydraulickreis der Vorrichtung (15) ansteuert.

9. Ballenpresse (4) nach einem der Ansprüche 1 bis 8, **dadurch gekennzeichnet, dass** der Hydraulikkreis der Vorrichtung (15) dazu eingerichtet ist, das zumindest eine Arbeitsaggregat (10) der Ballenpresse (4) zu betreiben.

10. Kombination aus einem landwirtschaftlichen Zugfahrzeug (1), insbesondere einem Traktor (2), und einer landwirtschaftlichen Ballenpresse (4) nach Anspruch 1, wobei das Zugfahrzeug (1) eine Antriebseinheit (5) und ein Hydrauliksystem (6) zum Betreiben von Antriebs- und/oder Arbeitsaggregaten des Zugfahrzeugs (1) und/oder der Ballenpresse (4) umfasst, **dadurch gekennzeichnet, dass** die Vorrichtung (15) zum Temperieren des Hydrauliksystems (11) der Ballenpresse (4) an das Hydrauliksystem (6) des Zugfahrzeugs (1) angeschlossen ist.

11. Verfahren zum Betrieb einer landwirtschaftlichen Ballenpresse (4), insbesondere einer Quaderballenpresse, zum Pressen von Erntegut zu einem Ballen, welche einen Antrieb (9), zumindest ein Arbeitsaggregat (10) zum Fördern und/oder Verarbeiten des Ernteguts und ein Hydrauliksystem (11) zum Versorgen des Antriebs (9) und/oder des zumindest einen Arbeitsaggregats (10) umfasst, **dadurch gekennzeichnet, dass** das Hydrauliksystem (11) zum Erreichen und/oder Halten eines Betriebstemperaturbereiches, in welchem die Ballenpresse (4) optimal betrieben wird, durch eine hydraulisch betriebene Vorrichtung (15) temperiert wird, wobei die Vorrichtung (15) zum Betreiben an ein Hydrauliksystem (6) eines mit der Ballenpresse (4) im Betrieb gekoppelten landwirtschaftlichen Zugfahrzeugs (1), insbesondere eines Traktors (2), angeschlossen wird, wobei die Vorrichtung (15) einen Wärmetauscher (17) umfasst, der die Vorrichtung (15) mit dem Hydraulikkreis des Hydrauliksystems (11) der Ballenpresse (4) verbindet.

## Claims

1. Agricultural baler (4), in particular cuboid baler, for pressing crop material into a bale, wherein the baler (4) comprises a drive (9), at least one working apparatus (10) for conveying and/or processing the crop material, and a hydraulic system (11) for supplying the drive (9) and/or the at least one working apparatus (10), **characterized in that** the hydraulic system (11) is assigned a hydraulically operated device (15) for controlling the temperature of the hydraulic system (11), which device is specified to connect to a hydraulic system (6) of an agricultural towing vehicle (1), in particular of a tractor (2), coupled to the baler (4) during operation, wherein the device (15) comprises a heat exchanger (17) which connects the device (15) to the hydraulic circuit of the hydraulic system (11) of the baler (4).

2. Baler (4) according to Claim 1, **characterized in that** the device (15) comprises two ports (16A, 16B) for connecting to hydraulic ports (8A, 8B), disposed in a rear region of the towing vehicle (1), of a hydraulic port assembly (7) of the towing vehicle (1) in order to connect the device (15) to a pressurized line (P) and to a return line (T) of the hydraulic system (6) of the towing vehicle (1).

3. Baler (4) according to Claim 1 or 2, **characterized in that** the heat exchanger (17) is designed as a plate heat exchanger.

4. Baler (4) according to one of Claims 1 to 3, **characterized in that** the device (15) comprises a protective valve device (18) which is disposed upstream of the heat exchanger (17) and by means of which the two ports (16A, 16B) of the device (15) can be shortcircuited when a threshold value for the hydraulic pressure, the flow rate and/or the temperature in the hydraulic circuit of the device (15) is exceeded.

5. Baler (4) according to Claim 4, **characterized in that** the device (15) for detecting the transgression of the threshold value for the hydraulic pressure, the flow rate and/or the temperature in the hydraulic circuit of the device (15) comprises at least one sensor.

6. Baler (4) according to Claim 5, **characterized in that** the at least one sensor is designed as a switch which automatically actuates the protective valve device (18) when a transgression of threshold value for the hydraulic pressure, the flow rate and/or the temperature in the hydraulic circuit of the device (15) is detected.

7. Baler (4) according to one of Claims 4 to 6, **characterized in that** the baler (4) comprises a control device configured to actuate the protective valve device (18).

8. Baler (4) according to Claim 7, **characterized in that** the at least one sensor transmits measurement signals to the control device and the control device actuates the protective valve device (18) when the threshold value for the hydraulic pressure, the flow rate and/or the temperature in the hydraulic circuit of the device (15) is exceeded.

9. Baler (4) according to one of Claims 1 to 8, **characterized in that** the hydraulic circuit of the device (15) is specified to operate the at least one working apparatus (10) of the baler (4).

10. Combination of an agricultural towing vehicle (1), in particular a tractor (2), and an agricultural baler (4) according to Claim 1, wherein the towing vehicle (1) comprises a drive unit (5) and a hydraulic system (6) for operating drive and/or working apparatuses of the towing vehicle (1) and/or of the baler (4),
**characterized in that** the device (15) for controlling the temperature of the hydraulic system (11) of the baler (4) is connected to the hydraulic system (6) of the towing vehicle (1).

11. Method for operating an agricultural baler (4), in particular a cuboid baler, for pressing crop material to a bale, which comprises a drive (9), at least one working apparatus (10) for conveying and/or processing the crop material, and a hydraulic system (11) for supplying the drive (9) and/or the at least one working apparatus (10), **characterized in that** the hydraulic system (11) for reaching and/or maintaining an operating temperature range in which the baler (4) is optimally operated is temperature-controlled by a hydraulically operated device (15), wherein the device (15) for operation is connected to a hydraulic system (6) of an agricultural towing vehicle (1), in particular of a tractor (2), coupled to the baler (4) during operation, wherein the device (15) comprises a heat exchanger (17) which connects the device (15) to the hydraulic circuit of the hydraulic system (11) of the baler (4).

## Revendications

1. Presse à balles agricole (4), en particulier presse à balles carrées, destinée à presser des produits récoltés en une balle, la presse à balles (4) comprenant un entraînement (9), au moins un ensemble de travail (10) destiné à transporter et/ou à traiter les produits récoltés et un système hydraulique (11) destiné à alimenter l'entraînement (9) et/ou l'ensemble de travail (10), **caractérisée en ce qu'**est associé au système hydraulique (11) un dispositif à fonctionnement hydraulique (15) destiné à thermoréguler le système hydraulique (11), lequel est mis au point pour être raccordé à un système hydraulique (6) d'un véhicule de traction agricole (1), en particulier d'un tracteur (2), accouplé à la presse à balles (4) en fonctionnement, le dispositif (15) comprenant un échangeur de chaleur (17), qui relie le dispositif (15) au circuit hydraulique du système hydraulique (11) de la presse à balles (4).

2. Presse à balles (4) selon la revendication 1, **caractérisée en ce que** le dispositif (15) comprend deux raccords (16A, 16B) pour le raccordement à des raccords hydrauliques (8A, 8B), disposés dans une zone arrière du véhicule de traction (1), d'un ensemble de raccord hydraulique (7) du véhicule de traction (1), afin de relier le dispositif (15) à une conduite de pression (P) et à une conduite de retour (T) du système hydraulique (6) du véhicule de traction (1).

3. Presse à balles (4) selon la revendication 1 ou 2, **caractérisée en ce que** l'échangeur de chaleur (17) est formé comme un échangeur de chaleur à plaques.

4. Presse à balles (4) selon l'une des revendications 1 à 3, **caractérisée en ce que** le dispositif (15) comprend un système de soupape de protection (18), qui est monté en amont de l'échangeur de chaleur (17) et qui permet de court-circuiter, en cas de dépassement d'une valeur de seuil pour la pression hydraulique, le débit et/ou la température dans le circuit hydraulique du dispositif (15), les deux raccords (16A, 16B) du dispositif (15).

5. Presse à balles (4) selon la revendication 4, **caractérisée en ce que** le dispositif (15) comprend au moins un capteur pour détecter le dépassement de la valeur de seuil pour la pression hydraulique, le débit et/ou la température dans le circuit hydraulique du dispositif (15).

6. Presse à balles (4) selon la revendication 5, **caractérisée en ce que** l'au moins un capteur est formé comme un commutateur, qui pilote automatiquement le système de soupape de protection (18) lorsqu'un dépassement de la valeur de seuil pour la pression hydraulique, le débit et/ou la température dans le circuit hydraulique du dispositif (15) est détecté.

7. Presse à balles (4) selon l'une des revendications 4 à 6, **caractérisée en ce que** la presse à balles (4) comprend un dispositif de commande mis au point pour piloter le système de soupape de protection (18).

8. Presse à balles (4) selon la revendication 7, **caractérisée en ce que** l'au moins un capteur transmet des signaux de mesure au dispositif de commande et le dispositif de commande pilote le système de soupape de protection (18) lorsque la valeur de seuil pour la pression hydraulique, le débit et/ou la température dans le circuit hydraulique du dispositif (15) est dépassée.

9. Presse à balles (4) selon l'une des revendications 1 à 8, **caractérisée en ce que** le circuit hydraulique du dispositif (15) est mis au point pour faire fonctionner l'au moins un ensemble de travail (10) de la presse à balles (4).

10. Combinaison d'un véhicule de traction agricole (1), en particulier d'un tracteur (2), et d'une presse à balles agricole (4) selon la revendication 1, le véhicule de traction (1) comprenant une unité d'entraînement (5) et un système hydraulique (6) pour faire fonctionner des ensembles d'entraînement et/ou de travail du véhicule de traction (1) et/ou de la presse à balles (4). **caractérisée en ce que** le dispositif (15) est raccordé au système hydraulique (6) du véhicule de traction (1) pour thermoréguler le système hydraulique (11) de la presse à balles (4).

11. Procédé pour faire fonctionner une presse à balles agricole (4), en particulier une presse à balles carrées, pour presser des produits récoltés en une balle, laquelle comprend un entraînement (9), au moins un ensemble de travail (10) pour transporter et/ou traiter les produits récoltés et un système hydraulique (11) pour alimenter l'entraînement (9) et/ou l'au moins un ensemble de travail (10), **caractérisé en ce que** le système hydraulique (11) est thermorégulé par un dispositif à fonctionnement hydraulique (15) pour atteindre et/ou maintenir une plage de températures de fonctionnement, dans laquelle la presse à balles (4) fonctionne de manière optimale, le dispositif (15) étant raccordé pour le fonctionnement à un système hydraulique (6) d'un véhicule de traction agricole (1) accouplé à la presse à balles (4) en fonctionnement, en particulier d'un tracteur (2), le dispositif (15) comprenant un échangeur de chaleur (17), qui relie le dispositif (15) au circuit hydraulique du système hydraulique (11) de la presse à balles (4).
